# EUROPEAN PATENT SPECIFICATION

(11) **EP 1 159 575 B1**
(45) Date of publication and mention of the grant of the patent: **05.01.2005**
(21) Application number: 00907397.4
(22) Date of filing: 07.03.2000
(51) Int. Cl.: F28F 9/18, F28F 21/06, B29C 65/14

(54) **LASER BONDING OF HEAT EXCHANGER TUBES**
LASERSCHWEISSEN VON WÄRMETAUSCHERROHREN
LIAISON DE TUBES D'ECHANGEUR THERMIQUE AU MOYEN D'UN LASER

(30) Priority: 08.03.1999 US 123272 P
(43) Date of publication of application: 05.12.2001
(73) Proprietor: Cesaroni Technologies Incorporated, Gormley, Ontario L0H 1G0 (CA); Cesaroni, Anthony Joseph, Unionville, Ontario L3R 8J1 (CA)
(72) Inventor: TONTEGODE, Jack, Lorne, Pickering, Ontario L1W 3Z7 (CA); COLANGELO, Roberto, Richmond Hill, Ontario L4E 3T3 (CA); CESARONI, Anthony, Joseph, Unionville Ontario L3R 8J1 (CA)
(74) Representative: Gritschneder, Martin, Dipl.-Phys.
(86) International application number: PCT/CA2000/000237
(87) International publication number: WO 2000/053991

(56) References cited:
- EP-A- 0 226 094
- EP-A- 0 243 575
- EP-A- 0 305 702
- DE-U- 29 618 878
- US-A- 5 501 759
- US-A- 5 840 147
- PATENT ABSTRACTS OF JAPAN vol. 009, no. 194 (M-403), 10 August 1985 (1985-08-10) & JP 60 060497 A (HITACHI SEISAKUSHO KK), 8 April 1985 (1985-04-08)

## Description

### BACKGROUND OF THE INVENTION

The present invention concerns a process for producing a plastic heat exchanger according to the preamble of claim 1. Such a process is known from EP-A-0 226 094.

Thermoplastic polyamides, including nylon 6, nylon 6,6 and various high-temperature nylons have been used to make heat exchangers. Often, panels have been shaped and pressed or adhered together to make tube panels, forming chancels through which a heat exchange fluid can pass. However, it has been discovered that such tube panels are more likely to leak than assemblies of tubes themselves. However, assembling multiple tubes and sealing them into tube panels has been a labor intensive effort. More efficient and reliable methods of preparing tube sheet of thermdplastic polymers are desirable.

US Patents 5,469,915 - Cesaroni (Nov. 28,1995) describes a tube panel heat exchanger; 5,501,759 - Forman (Mar. 26, 1996) describes use of lasers to weld a collar around a single catheter tube, including optional use of a fiber optic around the tube; 4,224,096 - Osborne (Sept. 23, 1980) describes splitting a single laser beam and applying two parts of the beam to opposite sides of a plastic artiele for welding: and 3,769,117 - Bowen et al. (Oct. 30, 1973) applies to laser welding of plastic tubes. EP Application 0 226 094 describes a complex heating and cooling tool to weld plastic tubes to a header with a uniform cross-section. Each of these patents and application can be referred to for understanding the state of the art. Some teach different types of laser sources useful for welding plastics.

### SUMMARY OF THE INVENTION

The present invention provides a process for producing a plastic heat exchanger according to claim 1.

### BRIEF DESCRIPTION OF THE DRAWINGS

Fig. 1 shows a perspective view of a header of the invention, with collar and tube end pairs.
Fig. 2 is an enlargement of a portion of Fig. 1, showing a collar, but also with a tube sticking through the collar.
Fig. 3 shows a heat exchanger made according to the invention.
Fig. 4 is a schematic illustration of an infrared energy source such as a laser apparatus with lenses and fiber optics to permit melt bonding of a tube-collar pair.
Fig. 5 is a schematic illustration of the subject of Fig. 3 with multiple laser, lens and fiber optics arrangements to permit gang-melt bonding of the tube-collar pairs to form a tube header.
Fig. 6 shows a cylindrical lens that can be used to heat a line of tube ends simultaneously.

### DETAILED DESCRIPTION OF THE INVENTION

It is preferred to use a laser such as SDL's FD25 series, using gallium arsenide semiconductor lasers operating at wavelengths in the range of 910-930 nm, preferably 915 nm, and an energy of 6 - 12 watts with a feed rate of 7.0 in/min (17.8 cm/min), preferably at about 7 watts to bond tubes of nylon 66 (DuPont's "Zytel" 42) to tube sheets of a blend of 20% by weight nylon 6 with 80% nylon 66 (nylon 66-6). The tube sizes preferably range form 0.034 to 0.128 inches (0.836 - 3.25 mm) inside diameter and 0.050 to 0.144 inches (1.27 - 3.66 mm) outside diameter. Alternatively, the tube sheets can be nylon 66 or either 66-6 or 66 with glass filling, or other polyamides or ITPs as described below.

While the invention is illustrated with tubing formed from certain polyamides, it will be apparent that it is not limited to the use of such materials and that other thermoplastics, preferably isotropic thermoplastics (ITP) can be used alternatively and can be used in combination with liquid crystal polymers (LCP) in various structures including multilayer tubes, as described below.

Isotropic herein means that the polymer is isotropic when tested by the TOT Test described in U.S. Patent 4,11S.372. Any ITP may be used so long as it meets certain rquirements. It must of course withstand the temperatures to which the heat exchanger is subjected and should throughout that temperature range provide sufficient strength (together with the LCP) to the heat exchanger to reasonably maintain its shape and contain the fluids in the heat exchanger, as needed. If it is exposed to one or more of the fluids in the heat exchanger (or any other adventitions materials that may contact it) it should be preferably reasonably chemically stable to those fluids so as to maintain its integrity.

Although various types of heat exchangers made simply of ITPs have been described, ITPs sometimes have serious drawbacks when they are the only materials in heat exchangers. Sometimes an ITP may not be chemically stable to one or more of the fluids in the heat exchanger, for instance, many polyesters hydrolyze or otherwise degrade in the presence of water, water-alcohol, or water-glycol mixtures, especially at higher than ambient temperatures. Many ITPs are relatively permeable to many liquids and/or gases, and therefore allow losses and/or migration of these materials in or from the heat exchanger. Some ITPs may be swollen by one or more of the fluids used in the heat exchanger thereby changing their dimensions and/or physical properties. All of the above are of course problems in plastic heat exchangers.

It has been found that a layer of a thermotropic liquid crystalline polymer (LCP) used in the heat exchanger often alleviates or eliminates one or more of the above mentioned problems. By an LCP is meant a polymer that is anisotropic when tested in the TOT Test described in U.S. Patent 4,118,372. If the LCP layer is placed between a fluid and any particular ITP in the heat exchanger it usually protects that ITP from chemical degradation by the fluid, and/or also often protects the ITP from being swollen by that fluid. In addition, even if the ITP is swollen, the LCP because of its high relative stiffness, and the fact that it is not swollen by many fluids, help the overall heat exchanger maintain its shape and dimensions. Also, the LCP acts as an excellent barrier layer to many fluids. For instance, in automotive heat exchangers which help cool the engine, the commonly used internal coolant is a mixture of a glycol and water, and the external coolant is air. With many ITPs diffusion of water and/or glycol is so rapid that frequent replenishment of the water/glycol mixture is needed. If an LCP layer is included, the diffusion is greatly decreased.

In order to obtain rapid heat transfer through the heat exchanger, thickness through the material between the heat transfer fluids should be a small as possible. This would be true with any material used for an heat exchanger, but is especially important with plastics since their thermal conductivities are usually relatively low when compared to metals. Since the LCP is usually the more expensive of the polymers present in the heat exchanger, it is economically preferable to limit its use. Therefore, in most constructions it is preferred that the LCP is present in relatively thin layer(s) and that layer(s) of the ITP be relatively thick so as to carry much of the structural load of the heat exchanger (i.e., pressure of the fluid(s), maintain structural shape and dimensions, etc.).

The heat exchanger is made up of one or more LCP layers and one or more layers of ITP. If more than one layer of LCP or ITP is present, more than one type of LCP or ITP, respectively, can be used. In addition other layers may be present. For example, so called tie layers, also called adhesive layers, may be used to increase the adhesion between various LCP and ITP layers, or between ITP layers or between LCP layers. The number and placement of the various layers in the heat exchanger will vary depending on the particular polymers chosen, the fluids used in or by the heat exchanger, temperature requirements, environmental needs, etc.

Most commonly, tie layers and LCP layers will be relatively thin compared to the ITP layer(s). Typical constructions are given below, wherein Fluids 1 and 2 represent the fluids involved in the heat transfer:
(a) Fluid 1/LCP/ITP/Fluid 2
(b) Fluid 1/ITP-1/LCP/ITP-1 or-2/Fluid 2
(c) Fluid 1/LCP-1/ITP/LCP-2/Fluid 2
(d) Fluid 1/ITP-1/LCP-1/ITP-2/LCP-2/Fluid 2
(e) Fluid 1/ITP-1/ITP-2/LCP/Fluid 2
(f) Fluid 1/LCP-1/ITP-1/ITP-2/LCP-2/Fluid 2
In all of the above constructions, tie layers may be present between all, some or none of the various polymer layers.

Some of the above constructions may be particularly useful in certain situations. If Fluid 1 but not Fluid 2 chemically attacked the ITP, construction (a) may be particularly useful, but (c) and (f) may also be utilized. If both Fluids 1 and 2 attacked the ITP present construction (c) or (f) may be particularly useful. If one wanted to minimize diffusion of one fluid to another, a construction having two LCP layers, such as (c), (d) or (f) could be chosen. If a special surface is required to reduce abrasive damage on the Fluid 1 side, but great stiffness is also required from the ITP, a construction such as (e) could be chosen wherein ITP-1 and ITP-2 have the requisite properties. These and other combinations of layers having the correct properties for various applications will be obvious to the artisan.

Useful LCPs include those described in U.S. Patents 3,991,013, 3,991,014 4,011,199, 4,048,148, 4,075,262, 4,083,829, 4,118,372, 4,122,070, 4,130,545, 4,153,779, 4,159,365, 4,161,470, 4,169,933, 4,184,996, 4,189,549, 4,219,461, 4,232,143, 4,232,144, 4,245,082, 4,256,624, 4,269,965, 4,272,625, 4,370,466, 4,383,105, 4,447,592, 4,522,974, 4,617,369, 4,664,972, 4,684,712, 4,727,129, 4,727,131, 4,728,714, 4,749,769, 4,762,907, 4,778,927, 4,816,555, 4,849,499, 4,851,496, 4,851,497, 4,857,626, 4,864,013, 4,868,278, 4,882,410, 4,923,947, 4,999,416, 5,015,721, 5,015,722, 5,025,082, 5,086,158, 5,102,935, 5,110,896, and 5,143,956, and European Patent Application 356,226. Useful thermotropic LCPs include polyesters, poly(ester-amides), poly(ester-imides), and polyazomethines. Especially useful are LCPs that are polyesters or poly(ester-amides). It is also preferred in these polyesters or poly(ester-amides) that at least about 50 percent, more preferably at least about 75 percent, of the bonds to ester or amide groups, i.e., the free bonds of -C(O)O- and -C(O)NR1- wherein R1 is hydrogen or hydrocarbyl, be to carbon atoms which are part of aromatic rings. Included within the definition herein of an LCP is a blend of 2 or more LCPs or a blend of an LCP with one or more ITPs wherein the LCP is the continuous phase.

Useful ITPs are those that have the requisite properties as described above, and include: polyolefins such as polyethylene and polypropylene; polyesters such as poly(ethylene terephthalate, poly(butylene terephthalate), poly(ethylene 2,6-napthalate), and a polyester from 2,2-bis(4-hydroxyphenyl)propane and a combination of isophthalic and terephthalic acids; styrenics such as polystyrene and copolymers of styrene with (meth)acrylic esters; acrylonitrile-butadiene-styrene thermoplastics; (meth)acrylic polymers including homo- and copolymers of the parent acids, and/or their esters and/or amides; polyacetals such as polymethylene oxide; fully and partially fluoropolymers such as polytetrafluoroethylene, polychlorotrifluoroethylene, poly(tetrafluoroethylene/hexafluoropropylene) copolymers, ) poly[tetrafluoroethylene/perfluoro(propyl vinyl ether)] copolymers, poly(vinyl fluoride), poly(vinylidene fluoride), and poly(vinyl fluoride/ethylene) copolymers; ionomers such as an ionomer of an ethylene-acrylic acid copolymer; polycarbonates; poly(amide-imides); poly(ester-carbonates); poly(imide-ethers); polymethylpentene; linear polyolefins such as polypropylene; poly(etherketoneketone); polyimides; poly(phenylene sulfide); polymers of cyclic olefins; poly(vinylidene chloride); polysulfones; poly(ether-sulfones); and polyamides such as nylon-6,6 nylon-6, nylon-6,12, nylon-6,12, nylon 4,6, and the polyamides from terephthalic acid and/or isophthalic acid and 1,6-hexanediamine and/or 2-methyl-1,5-pentanediamine. Polyamides are preferred ITPs and preferred amides are nylon-6,6, nylon-6, and a copolymer of terephthalic acid with 1,6-hexandiamine and 2-methyl-1,5-pentanediamine wherein 1,6-hexanediamine is about 30 to about 70 mole percent of the total diamine used to prepare the polymer. Especially preferred polyamides are nylon-6,6, nylon-6 and a copolymer of terephthalic acid with 1,6-hexandiamine and 2-methyl-1,5-pentanediamine wherein 1,6-hexanediamine is about 50 mole percent of the total diamine used to prepare the polymer. Included within the definition of ITP herein are blends of 2 or more ITPs or blends of one or more ITPs with an LCP provided that the ITP(s) is the continuous phase.

One or more (if present) of the ITPs may be toughened. Toughening is known in the art, and may be accomplished by adding one or more or a rubber, functionalized rubber, resin which reacts with the ITP such as an epoxy resin, or other materials. Toughened polyamides are preferred.

The polymers may contain other materials conventionally found in polymers, such as fillers, reinforcing agents, antioxidants, antiozonants, dyes, pigments, etc. An especially useful material is a filler with high heat conductivity, which may increase the efficiency of the heat exchanger.

The composition of a tie layer will depend on which two polymers are on either side of it. For instance the tie layer may be an ITP functionalized or grafted to provide adhesion between the ITP and LCP layers, or may be a blend of one or more ITPs and one or more LCPs.

Typical thicknesses for ITP layers will range from about 0.025 to about 0.25 mm. Typical thicknesses for LCP layers will be about 0.01 to about 0.1 mm. Tie layers will usually be as thin as possible, consistent with their providing adhesion between polymer layers. This is usually about 0.01 to about 0.1 mm. The total thickness of the structure is preferably less than about 0.7 mm, more preferably about 0.12 to about 0.5 mm, and especially preferably about 0.15 mm to about 0.4 mm.

Typically in charge air coolers tubing having an outside diameter of 2 mm is used, and air handling coils may typically have an outside diameter of .6 mm.

In the art of laser welding of plastics, the darkness of filler used in the plastic is important. By experiment, it has been found with the present invention that 2% carbon black in the collars inhibits the penetration of the infrared energy into the tubes themselves, and that 0.2% by weight carbon black is about right. Other colorants can be used instead of or in addition to carbon black, such as negrizine.

Instead of a laser source, a focused infrared light source can be used, such as PDR's SMT Soldering Light.

With a laser energy source, it has been found that lenses on both ends of a fiber optic apparatus are desirable, although if the output end is close enough to the material being heated, one can sometimes operate without a lens on the output end. This can permit ganging of a number of fiber optic apparatuses, with one pointed at each of several tube-collar pairs in the present invention.

### EXAMPLES AND DESCRIPTION OF THE DRAWINGS

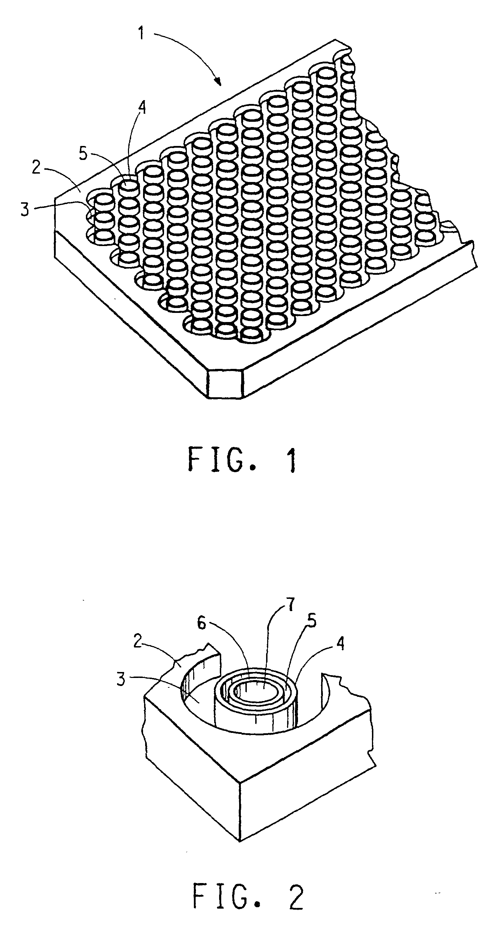

Fig. 1 shows a tube header sheet at 1, with a flat land 2, from which has been removed material at 3, except in the area of holes 5 surrounding tubes 4. This leaves collars sticking up form a flat surface. Of course, this can be done in a variety of ways, including numerically controlled machining or molding.
Fig. 2 is an enlarged view of part of Fig. 1, showing the same elements, but also with a tube 6, having a hole 7, sticking through hole 5 in collar 4.

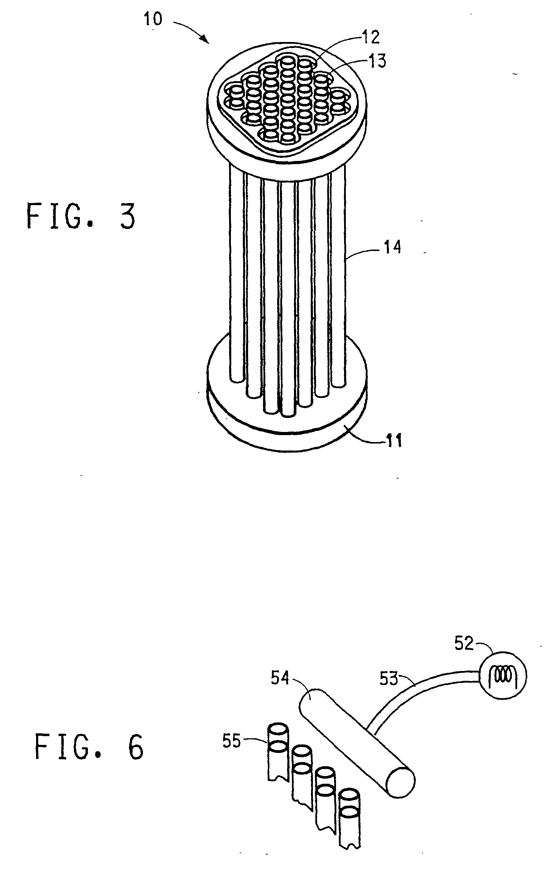

Fig. 3 is an illustration of one way to put together two such headers, 10 and 11, with collars 13 sticking up from flat area 12 and tubes 14 passing between headers 10 and 11 and through collars 13 in each of the headers. By means of the invention, once the tubes 14 have been inserted through collars 13, they can be heated by infrared means and melt-welded in place.

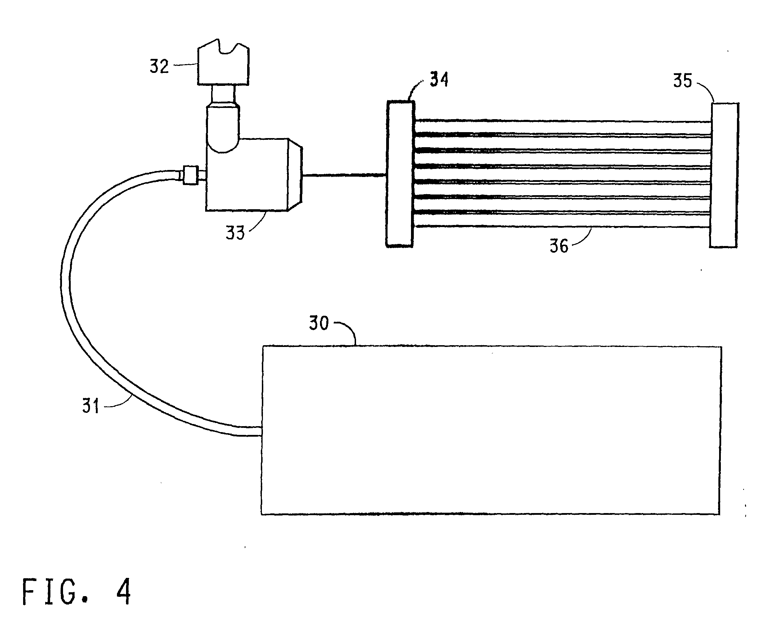

Fig. 4 illustrates using a laser source, indicated by box 30, passing laser light through fiber optic 31, through head 33, the position of which is controlled by indexer 32. As described above, this setup is used to melt-weld tubes 36 into headers 34 and 35, with indexer 32 positioning head 33 for each of the necessary welds. Tubes can be welded individually or in groups, such as with a linear lens 54 shown in Fig. 6. Also, multiple fiber optics can be used from head 33, with or without lenses, so long as enough energy is provided at the tube and collar to do the desired melt welding. If no lens is used, the fiber optic needs to be close to the collar and tube, but more fiber optics can be ganged together without the bulk of lenses, so that faster production can be obtained.

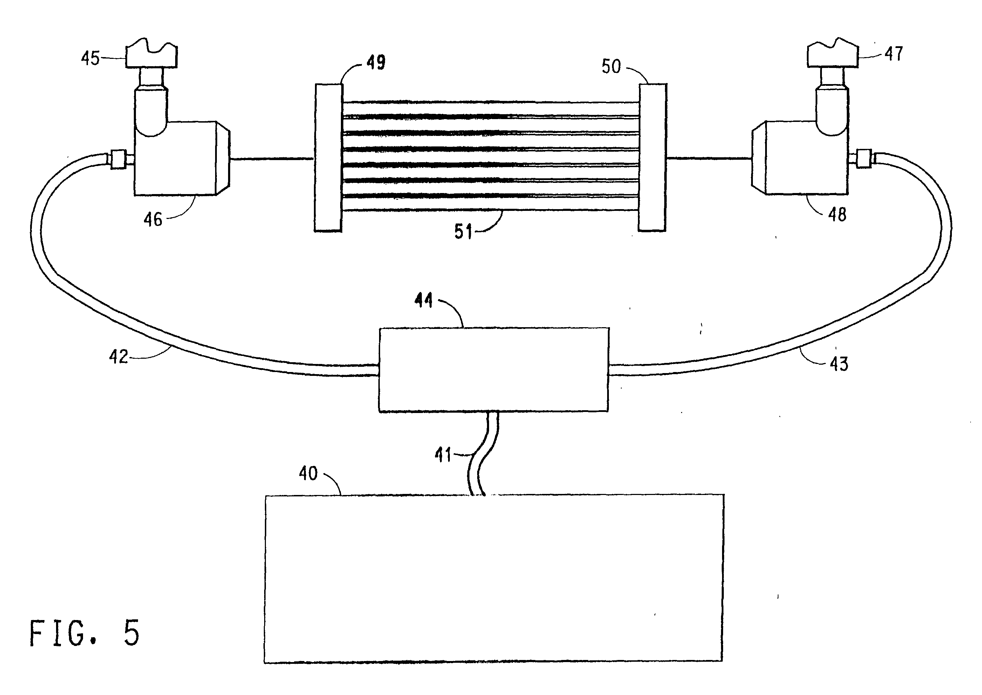

Fig. 5 is a different version of Fig. 4, but with the laser source 40 feeding a dividing box 42 through fiber optic 41 where the energy is divided into two fiber optics 42 and 43. These are then fed through heads 46 and 48, controlled by indexers 45 and 47, to weld tubes 51 to headers 49 and 50.
Fig. 6 illustrates the use of a cylindrical lens to spread the infrared energy from a source 52, delivered through a fiber optic 53 to lens 54, so that a number of tubes and collars 55 can be melt-welded simultaneously. Lens 54 need not be sylindrical, but other lens shapes that can spread energy, such as laterally, can be used. This can, for instance, provide for welding part or all of a line of tube-collar pairs at on time, with the lens then indexing to the next line until the entire apparatus has been finished.

## Claims

1. A process for producing a plastic heat exchanger with a primary heat exchange fluid circulating in multiple tubes (4) and outside said tubes (4) a secondary heat exchange fluid circulates, said heat exchanger having a pair of tube-header sheets (10, 11) with a multiplicity of holes (5) having sizes to accommodate said tubes (4).
said sheets (10, 11) each having an outer side and an inner side, with the inner sides of one of said sheets facing the inner side of the other of said sheets and said inner side being suitable for being exposed to said secondary heat exchange fluid after assembly of the finished heat exchanger,
on the outer side of each of said sheets (10, 11), said holes having raised portions (6) adapted to surround and contact said tubes (4) as they protrude through said holes (5),
said process including:
inserting said tubes (4) through said holes (5), and bonding said tube ends to said raised portions by melting said raised portions and tube ends together
**characterized by**
the raised portions forming collars (6),
the outer ends of the tubes (4) being inserted through holes (5) so that the outer ends of the tubes (4) being proximate to the outer ends of the collars (5) to form tube-collar pairs,
an infrared energy source being used for bonding the tube ends to that collar (6), and
plastic material of the collars (6) including about 0.2 % by weight carbon black or other colorants instead of or in addition to carbon black producing the same absorption of the infrared energy.

2. The process of claim 1 wherein said infrared energy source involves lenses and fiber opties to focus the infrared energy on the end of each tube and its surrounding collar.

3. The process of claim 2 wherein the infrared energy is directed axially at the tube end and its collar.

4. The process of claim 1 wherein the infraned energy source produces coherent infrared laser energy.

5. The process of claim 1 wherein the infrared energy source produces non-coherent infrared energy.

6. The process of claim 4 wherein the laser energy source is divided and conducted to the tube-collar pairs through a multiplicity of fiber optics arrangements used to bond a multiplicity of tube-collar pairs simultaneously.

7. The process of claim 4 wherein the tube-collar pairs are arranged in linear rows, with fiber optics arrangements having a linear shape permitting focusing on more than one tube-collar pair at a time, and the infrared laser energy is focused on at least part of a muitiplicity of tubes in a linear row at one time.

8. The process of claim 7 wherein the fiber optics arrangement involves a linear lens, transverse to the fiber optic, which spreads the infrared energy across a number of tube ends simultaneously.

9. The process of claim 8 wherein the fiber optics arrangement is focused on substantially a full row of tube-collar pairs at one time.

10. The process of claim 5 wherein substantially all the tube-collar pairs at both ends of the heat exchanger are bonded at one time.

11. The process of claim 1 wherein the tubes and headers are thermoplastic materials.

12. The process of claim 11 wherein the thermoplastic materials are polyamides.

13. The process of claim 12 wherein the opacity of the plastic in the tubes and in the collars is controlled to optimize the absorption of infrared energy.

## Patentansprüche

1. Verfahren zur Herstellung eines Kunststoff-Wärmetauschers mit einem in mehreren Röhren (4) umlaufenden primären Wärmeübertragungsfluid und einem außerhalb der Röhren (4) umlaufenden sekundären Wärmeübertragungsfluid, wobei der Wärmetauscher ein Paar Röhrenverteilerplatten (10,11) mit mehreren Löchern (5) von geeigneter Größe zur Aufnahme der Röhren (4) aufweist,
wobei die Platten (10,11) jeweils eine Außenseite und eine Innenseite aufweisen,
wobei die Innenseite einer der Platten der Innenseite der anderen Platte gegenüber liegt und die Innenseite nach der Montage des fertigen Wärmetauschers für die Einwirkung des sekundären Wärmeübertragungsfluids geeignet ist,
wobei an der Außenseite der jeweiligen Platte (10,11) die Löcher erhöhte Abschnitte (6) aufweisen, die so angepaßt sind, daß sie die durch die Löcher (5) vorstehenden Röhren (4) umgeben und berühren,
wobei das Verfahren aufweist:
Einführen der Röhren (4) durch die Löcher (5) und Verbinden der Röhrenenden mit den erhöhten Abschnitten durch Verbinden der erhöhten Abschnitte mit den Röhrenenden,
**dadurch gekennzeichnet, daß**
die erhöhten Abschnitte Muffen (6) bilden,
die äußeren Enden der Röhren (4) durch die Löcher (5) so eingeführt werden, daß die äußeren Enden der Röhren (4) den äußeren Enden der Muffen (6) benachbart sind, um Röhren-Muffen-Paare zu bilden,
eine Infrarotenergiequelle zum Verbinden der Röhrenenden mit den Muffen (6) benutzt wird, und
das Kunststoffmaterial der Muffen (6) etwa 0,2 Gew.-% Ruß oder andere Färbemittel anstelle oder zusätzlich zu dem Ruß enthält, um die gleiche Absorption von Infrarotenergie hervorzurufen.

2. Verfahren nach Anspruch 1, wobei die Infrarotenergiequelle Linsen und Lichtleiter enthält, um die Infrarotenergie auf das Ende jeder Röhre und der sie umgebenden Muffe zu fokussieren.

3. Verfahren nach Anspruch 2, wobei die Infrarotenergie axial auf das Röhrenende und die entsprechende Muffe gerichtet wird.

4. Verfahren nach Anspruch 1, wobei die infrarotenergiequelle kohärente Infrarotlaserenergie erzeugt.

5. Verfahren nach Anspruch 1, wobei die Infrarotenergiequelle nichtkohärente Infrarotenergie erzeugt.

6. Verfahren nach Anspruch 4, wobei die Laserenergie durch eine Vielzahl von Lichtleiteranordnungen unterteilt und zu den Röhren-Muffen-Paaren geleitet wird, um mehrere Röhren-Muffen-Paare gleichzeitig zu verbinden.

7. Verfahren nach Anspruch 4, wobei die Röhren-Muffen-Paare in geraden Reihen angeordnet sind, wobei die Lichtleiteranordnungen eine geradlinige Form haben, welche die gleichzeitige Fokussierung auf mehr als ein Röhren-Muffen-Paar auf einmal gestattet, und wobei die Infrarotlaserenergie gleichzeitig zumindest auf einen Teil der mehreren Röhren in einer geradlinigen Reihe fokussiert wird.

8. Verfahren nach Anspruch 7, wobei die Lichtleiteranordnung eine Linearlinse quer zum Lichtleiter aufweist, welche die Infrarotenergie gleichzeitig quer über eine Anzahl von Röhrenenden verteilt.

9. Verfahren nach Anspruch 8, wobei die Lichtleiteranordnung im wesentlichen gleichzeitig auf eine vollständige Reihe von Röhren-Muffen-Paaren fokussiert wird.

10. Verfahren nach Anspruch 5, wobei im wesentlichen alle Röhren-Muffen-Paare an beiden Enden des Wärmetauschers auf einmal verbunden werden.

11. Verfahren nach Anspruch 1, wobei die Röhren und Verteilerplatten aus thermoplastischen Materialien bestehen.

12. Verfahren nach Anspruch 11, wobei die thermoplastischen Materialien Polyamide sind.

13. Verfahren nach Anspruch 12, wobei die Lichtundurchlässigkeit bzw. Opazität des Kunststoffs in den Röhren und in den Muffen gesteuert wird, um die Absorption der Infrarotenergie zu optimieren.

## Revendications

1. Procédé pour la production d'un échangeur de chaleur en plastique avec un fluide d'échange de chaleur principal circulant dans de multiples tubes (4) et à l'extérieur desdits tubes (4) un fluide d'échange de chaleur secondaire circule, ledit échangeur de chaleur possédant une paire de feuilles de boîte de circulation de tubes (10, 11) avec une multiplicité de trous (5) présentant des tailles pour recevoir lesdits tubes (4),
lesdites feuilles (10, 11) possédant chacune un côté externe et un côté interne, le côté interne d'une desdites feuilles faisant face au côté interne de l'autre desdites feuilles et ledit côté interne étant approprié pour être exposé audit fluide d'échange de chaleur secondaire après l'assemblage de l'échangeur de chaleur fini,
sur le côté externe de chacune desdites feuilles (10, 11), lesdits trous présentant des parties en saillie (6) adaptées pour entourer et toucher lesdits tubes (4) lorsqu'ils dépassent par lesdits trous (5),
ledit procédé incluant:
l'insertion desdits tubes (4) par lesdits trous (5) et la liaison desdites extrémités des tubes auxdites parties en saillie en fondant lesdites parties en saillie et les extrémités des tubes ensemble,
**caractérisé par**:
les parties en saillie qui forment des colliers (6),
les extrémités externes des tubes (4) qui sont insérées par les trous (5) de sorte que les extrémités externes des tubes (4) sont à proximité des extrémités externes des colliers (6) pour former des paires tube-collier,
une source d'énergie infrarouge qui est utilisée pour lier les extrémités des tubes à ce collier (6), et
un matériau de plastique des colliers (6) incluant environ 0,2% en poids de noir de carbone ou d'autres colorants à la place ou en plus du noir de carbone produisant la même absorption de l'énergie infrarouge.

2. Procédé suivant la revendication 1, dans lequel ladite source d'énergie infrarouge implique des lentilles et des fibres optiques pour focaliser l'énergie infrarouge sur l'extrémité de chaque tube et son collier qui l'entoure.

3. Procédé suivant la revendication 2, dans lequel l'énergie infrarouge est dirigée axialement au niveau de l'extrémité de tube et de son collier.

4. Procédé suivant la revendication 1, dans lequel la source d'énergie infrarouge produit une énergie laser infrarouge cohérente.

5. Procédé suivant la revendication 1, dans lequel la source d'énergie infrarouge produit une énergie infrarouge non cohérente.

6. Procédé suivant la revendication 4, dans lequel la source d'énergie laser est divisée et conduite vers les paires tube-collier par une multiplicité d'arrangements de fibres optiques employés pour lier une multiplicité de paires tube-collier simultanément.

7. Procédé suivant la revendication 4, dans lequel les paires tube-collier sont disposées en rangées linéaires, les arrangements de fibres optiques ayant une forme linéaire permettant une focalisation sur plus d'une paire tube-collier en une fois et l'énergie laser infrarouge est focalisée sur au moins une partie d'une multiplicité de tubes dans une rangée linéaire en une fois.

8. Procédé suivant la revendication 7, dans lequel l'arrangement de fibres optiques implique une lentille linéaire, transversale à la fibre optique, qui déploie l'énergie infrarouge à travers un certain nombre d'extrémités de tube simultanément.

9. Procédé suivant la revendication 8, dans lequel l'arrangement de fibres optiques est focalisé sur substantiellement une rangée complète de paires tube-collier en une fois.

10. Procédé suivant la revendication 5, dans lequel substantiellement toutes les paires tube-collier aux deux extrémités de l'échangeur de chaleur sont liées en une fois.

11. Procédé suivant la revendication 1, dans lequel les tubes et les boîtes de circulation sont des matériaux thermoplastiques.

12. Procédé suivant la revendication 11, dans lequel les matériaux thermoplastiques sont des polyamides.

13. Procédé suivant la revendication 12, dans lequel l'opacité du plastique dans les tubes et dans les colliers est régulée pour optimiser l'absorption d'énergie infrarouge.
